# DEMANDE DE BREVET EUROPEEN

(11) **EP 1 749 563 A1**
(43) Date de publication de la demande: **07.02.2007**
(21) Numéro de dépôt: 06117742.4
(22) Date de dépôt: 24.07.2006
(51) Int. Cl.: B01D 53/12

(54) **PROCEDE ET DISPOSITIF DE TRAITEMENT DE MILIEU GAZEUX**

(30) Priorité: 25.07.2005 BE 200500367
(71) Demandeur: Verdesis, 1301 Bierges (BE)
(72) Inventeur: LOMBARD, Xavier, 1150, Bruxelles (BE); TOWER, Paul, Snohomish, WA 98296 (US); WETZEL, Jeffrey, Lake Stevens, WA 98258 (US); KHAIRALLAH, Philippe, 1160, Auderghem (BE); BILS, Bruno, 5000 Beez (BE)
(74) Mandataire: Claeys, Pierre

(57) **Abrégé**

Procédé et dispositif de traitement de milieu gazeux brut au moins partiellement combustible contenant des composés organiques volatils comprenant une adsorption des composés organiques volatils sur un agent adsorbant dans une zone d'adsorption, un transfert de l'agent adsorbant chargé vers une zone de désorption et une désorption des composés organiques volatils de façon à obtenir un agent adsorbant déchargé, et une récolte des composés organiques volatils désorbés. Le transfert de l'agent adsorbant chargé à l'état solide est effectué d'une manière étanche aux gaz.

## Description

La présente invention se rapporte à un procédé de traitement de milieu gazeux brut contenant des composés organiques volatils comprenant:
- une amenée dudit milieu gazeux brut au travers d'un agent adsorbant à l'état solide contenu dans une zone d'adsorption, ledit milieu gazeux contenant au moins partiellement un gaz combustible ou un gaz présentant un risque d'explosion
- une adsorption des composés organiques volatils sur ledit agent adsorbant,
- une sortie d'un milieu gazeux appauvri en composés organiques volatils hors de ladite zone d'adsorption,
- un transfert dudit agent adsorbant chargé en composés organiques volatils vers une zone de désorption,
- une désorption des composés organiques volatils de façon à obtenir un agent adsorbant déchargé, et
- une récolte des composés organiques volatils désorbés.

Dans le domaine du traitement de milieu gazeux brut, on connaît par exemple le brevet US 5 676 738 qui décrit un dispositif pour le traitement d'air contaminé par des composés organiques volatils ou de fumées industrielles contenant également des composés organiques volatils et dont le gaz porteur est de l'air.

Dans le procédé selon le brevet US précité, le milieu gazeux brut à traiter entre dans la cuve d'adsorption par le bas, il traverse l'agent adsorbant contenu dans la cuve d'adsorption et il en ressort par le haut, appauvri en composés organiques volatils. L'agent adsorbant sort de la cuve d'adsorption au bas de celle-ci et entre dans le haut d'une cuve de désorption au moyen d'un dispositif d'ascension pneumatique en vue de sa régénération. Il parcourt la cuve de désorption de haut en bas, se décharge en composés organiques volatils emportés par un gaz de désorption chaud alimenté en contre-courant et retourne ensuite à l'état déchargé vers la cuve d'adsorption au moyen d'un deuxième dispositif d'ascension pneumatique.

Dans le dispositif selon le brevet US, le milieu gazeux en traitement dans la cuve d'adsorption circule partiellement en même temps que l'agent adsorbant et passe de la cuve d'adsorption à la cuve de désorption et retourne ensuite vers la cuve d'adsorption, l'autre partie étant évacuée vers l'extérieur de la cuve d'adsorption.

Un tel dispositif sert donc uniquement à dépolluer de l'air ou des fumées. Il n'est absolument pas conçu, et serait même à proscrire pour traiter des milieux gazeux combustibles, des milieux gazeux bruts contenant des gaz combustibles ou encore des milieux gazeux présentant un risque d'explosion. Un exemple type d'un de ces trois milieux gazeux est le biogaz issu de réactions biologiques qui contient une teneur en méthane importante ainsi que des composés organiques volatils très différents (typiquement de 200 à 250 composés organiques volatils différents) présents dans des quantités d'environ 2 g/m³.

On connaît un procédé de traitement de milieu gazeux brut contenant des composés organiques volatils tel qu'indiqué au début (voir par exemple, le document EP 0 529 661).

Ce document décrit le traitement d'un milieu gazeux ne présentant pas de risques d'explosion, comme la séparation de dioxyde de carbone provenant de gaz de fumées. Il ne fait qu'évoquer la possibilité de traitement d'un gaz contenant un gaz combustible ou présentant un risque d'explosion, le gaz naturel, mais sans donner de détails particuliers pour son traitement.

Ce procédé comprend une étape de désorption sous vide. Malheureusement, la désorption sous vide tout en donnant de bons résultats lorsque le milieu gazeux comprend une faible quantité de contaminants à séparer, ne permet pas de traiter des milieux gazeux très chargés en contaminants différents, comme c'est le cas du biogaz par exemple. De plus, la réalisation d'une cuve de désorption résistant à une pression relative négative est complexe et coûteuse à mettre en oeuvre et met en péril la durée de vie de l'installation.

L'invention a pour but de pallier les inconvénients de l'état de la technique en procurant un procédé et un dispositif permettant de traiter tout type de gaz d'une manière similaire, à un très bon rendement, sans risque d'explosion et sans nécessiter d'équipement coûteux, d'une durée de vie réduite.

Pour résoudre ce problème, il est prévu suivant l'invention, un procédé tel qu'indiqué au début dans lequel ladite désorption est réalisée en présence d'un gaz de désorption chaud qui est différent dudit milieu gazeux exposé à l'adsorption et en ce que ledit transfert de l'agent adsorbant chargé à l'état solide est effectué d'une manière étanche aux gaz.

De cette façon, le procédé selon l'invention permet de réaliser l'étape de désorption à chaud dans une cuve qui est sensiblement simple à concevoir, peu coûteuse et dont la durée de vie est nettement plus longue.

La température nécessaire pour obtenir une bonne désorption des composés organiques volatils doit être de préférence élevée. En effet, dans un milieu gazeux tel que du biogaz par exemple, il faut atteindre de préférence une température de l'ordre de 150 à 160°C pour que les composés organiques volatils adsorbés se volatilisent efficacement. La présence d'un transfert étanche aux gaz suivant l'invention entre la zone d'adsorption et la zone de désorption permet d'utiliser, même à ces températures, et alors que le milieu gazeux à traiter contient un gaz combustible ou présentant un risque d'explosion, un gaz de désorption, par exemple contenant de l'air. L'air est effet un gaz aisément disponible et peu coûteux.

L'invention concerne donc également un procédé de production d'un gaz combustible ou à risque d'explosion à partir de gaz contaminé.

Avantageusement, la zone d'adsorption est à une première pression, supérieure à la pression atmosphérique et la zone de désorption est à une deuxième pression, inférieure à la première et supérieure ou égale à la pression atmosphérique..

Le procédé prévoit de travailler à deux pressions différentes. En effet, les amenées de milieu gazeux brut à traiter provenant par exemple de décharge ou d'installations produisant des gaz contaminés présentent toujours, après surpression, une pression positive par rapport à la pression atmosphérique. La pression dans la zone d'adsorption est donc directement celle dictée par les fournisseurs de ces milieux gazeux bruts à traiter.

Dans la zone de désorption, la pression est directement dictée par la suite du procédé et par la résistance des éléments en aval de la zone d'adsorption. En effet, l'atmosphère régnant dans la zone de désorption, chargée en composés organiques volatils, devra être transportée ailleurs en vue d'une étape ultérieure. Pour un transport de gaz, quel qu'il soit, il est préférentiel d'utiliser une pression légèrement supérieure à la pression atmosphérique, ni trop grande, ni trop petite. Il est bien connu que des pressions très supérieures à la pression atmosphérique dans des conduits de transport de gaz sont la hantise de l'homme de métier à cause des problèmes de résistance des matériaux et des problèmes de fuite, gaz aspiré vers l'intérieur ou expulsé vers l'extérieur.

La pression dans la cuve de désorption est donc inférieure à celle dans la cuve d'adsorption, le milieu gazeux brut à traiter aura tendance à se précipiter dans la cuve de désorption puisqu'elle est en dépression par rapport à la cuve d'adsorption dans laquelle il se trouve initialement. Or si le milieu gazeux brut contenant au moins partiellement un gaz combustible ou présentant un risque d'explosivité pénètre dans la cuve de désorption, comme on l'a mentionné ci-avant serait préjudiciable et présenterait un risque élevé d'explosion. Dès lors, le transfert d'agent adsorbant étanche au gaz présente plusieurs avantages qui sont d'une part qu'il permet de réaliser une désorption à haute température particulièrement adaptée au vu de la quantité de contaminants qui peuvent être adsorbés par le procédé selon l'invention, en présence d'un gaz de désorption, par exemple de l'air aisément disponible et peu coûteux et d'autre part, il évite l'explosion et maintient les deux pressions différentes.

Avantageusement, le procédé prévoit de traiter du biogaz qui comprend une teneur importante de méthane. En outre, généralement le biogaz comprend une quantité importante de composés organiques volatils (entre 0,2 et 5 g/m³ et généralement environ 2 g/m³) et d'eau (entre 5 et 50 g/m³, et généralement environ 27 g/m)._

Le biogaz, en plus de présenter un risque d'explosion est un gaz réellement difficile à traiter. Celui-ci ne peut par exemple pas être traité par un procédé comprenant une désorption sous vide. En effet, étant donné la quantité de contaminants présents tels que les siloxanes, le sulfure d'hydrogène, et les autres composés organiques volatils, il faudrait utiliser une pression tellement faible dans la cuve de désorption que celle-ci ne pourrait résister à cette pression ambiante.

Puisque le procédé peut traiter des gaz présentant un risque d'explosion, il peut évidement traiter le biogaz qui est un candidat idéal étant donné généralement sa haute teneur en composés organiques volatils. Le procédé suivant l'invention va ainsi non seulement servir à dépolluer un gaz, mais aussi à produire un gaz combustible, ce que ne permettrait en aucune façon le procédé du document US 5 676 738.

Avantageusement, le procédé prévoit un retour de l'agent adsorbant déchargé de ladite zone de désorption vers ladite zone d'adsorption effectué, lui aussi, d'une manière étanche aux gaz.

Ceci permet une récupération de l'agent adsorbant et dès lors, les coûts en matière première du procédé sont diminués. En outre, puisque la pression dans le désorbeur est inférieure à la pression dans l'adsorbeur, il faut que le retour de l'agent adsorbant à l'état solide puisse se faire de manière étanche au gaz afin de maintenir les pressions dans chaque zone. Ce retour s'effectuera de préférence sous l'effet de la gravité

En outre, le procédé prévoit que ladite amenée du biogaz soit précédée d'un séchage du milieu gazeux brut à traiter.

La réalisation préalable du séchage permet d'éliminer l'humidité du gaz. Le séchage sera de préférence réalisé par un abaissement de température par exemple à l'aide de groupes froids, de groupes à absorption de chaleur ou de tout système de production de froid. L'eau sera dès lors condensée et donc éliminée du biogaz. L'élimination d'humidité du milieu gazeux brut à traiter permet d'abaisser le point de rosée à 5°C à la pression atmosphérique.

En outre, il est prévu de préférence de réchauffer le gaz avant de l'amener dans la cuve d'adsorption afin d'améliorer les contacts entre l'adsorbant et le milieu gazeux brut à traiter.

La température idéale à appliquer dans la cuve d'adsorption est d'environ 20 à 25°C.

Selon l'invention, la désorption comprend un chauffage de l'agent adsorbant chargé par ledit gaz de désorption chaud à une température comprise entre 170°C et 500°C, de préférence de 200 à 400°C, et de manière plus préférentielle à 350°C environ.

Avantageusement, selon l'invention, la récolte des composés organiques volatils est suivie d'une oxydation desdits composés organiques volatils. Ceci permet de les relâcher ensuite sous forme de CO₂ et H₂O dans l'atmosphère puisque toute oxydation de tout composé organique aura pour résultat principalement ces deux composants.

Dans une forme de réalisation préférentielle, le chauffage susmentionné comprend un échange de chaleur entre l'agent adsorbant chargé et un gaz de désorption chaud, que ce soit à contre-courants, en courants parallèles ou transversaux. Ceci permet d'uniformiser l'échange de chaleur entre toutes les particules d'agent adsorbant et d'éviter la présence de points chauds et de points froids. Dès lors, le rendement de la désorption est augmenté.

Dans une forme de réalisation avantageuse, le procédé comprend en outre une filtration, par exemple à double étage, du gaz appauvri.

Bien que le gaz appauvri sortant de la cuve d'adsorption soit censé être complètement exempt de composés organiques volatils, il ne faut pas exclure que, dans certains cas de biogaz très chargés en composés organiques volatils, il soit possible qu'il en reste quelques ppm. Dès lors, il est prévu de munir la sortie de gaz appauvri de la cuve d'adsorption d'un système de filtration à double étage permettant l'élimination complète de ces composés nocifs. Les principaux composés volatils capturés par cette étape de filtration, lorsqu'elle est nécessaire, sont des composés de silicium, par exemple les siloxanes. Si le gaz est un biogaz, c'est un combustible destiné à être ultérieurement brûlé. Or la silice, lorsqu'elle brûle, se transforme en sable et il s'ensuit un processus de vitrification qui abîme les moteurs.

L'agent adsorbant est un mélange comprenant au moins du charbon actif et du graphite actif, en particulier sous forme de particules.

Lorsque le milieu gazeux brut à traiter est du biogaz, les contaminants principaux sont le limonène et l'α-pinène qui sont des hydrocarbures monoterpéniques. L'expérience montre que plus de 200 composés organiques volatils sont présents dans le biogaz. Ces composés sont éliminés par le charbon actif. Comme on l'a mentionné précédemment, les siloxanes posent également un problème, dès lors on utilise le graphite actif qui permet de les adsorber.

Bien entendu, en fonction du milieu gazeux brut à traiter et de ses contaminants, l'agent adsorbant présentera une composition différente. Déjà en fonction de la composition du biogaz à traiter, la proportion de graphite actif et de charbon actif va varier.

Avantageusement, le procédé selon l'invention comprend une utilisation du biogaz appauvri pour la production d'électricité verte. C'est-à-dire que le biogaz appauvri sera utilisé comme combustible dans une centrale électrique pour la production de ce que l'on appelle l'électricité verte, puisque le combustible est un produit de recyclage.

De manière avantageuse, ledit gaz de désorption chaud, qui présente notamment une faible teneur en oxygène inerte, est obtenu par un brûlage en présence d'air d'une partie du gaz appauvri obtenu, c'est-à-dire que le procédé selon l'invention prévoit d'être autonome en combustible, il utilise le biogaz appauvri comme combustible pour obtenir le gaz de désorption chaud, en particulier le gaz de désorption chaud inerte, nécessaire à la désorption des composés organiques volatils de l'agent adsorbant.

D'autres formes de réalisation du procédé suivant l'invention sont indiquées dans les revendications annexées.

La présente invention se rapporte également à un dispositif pour la mise en oeuvre du procédé de traitement de gaz contenant des composés organiques volatils. A cette fin, le dispositif selon l'invention comprend:
- une cuve d'adsorption de composés organiques volatils d'un milieu gazeux brut à traiter comprenant une entrée de milieu gazeux brut à traiter, une sortie de gaz appauvri en composés organiques volatils, une entrée d'agent adsorbant à l'état solide et une sortie d'agent adsorbant chargé de composés organiques volatils, et
- une cuve de désorption des composés organiques volatils chargés sur l'agent adsorbant comprenant une entrée d'agent adsorbant chargé, une sortie d'agent adsorbant déchargé et une sortie des composés organiques volatils désorbés.

Ce dispositif est caractérisé en ce que ladite cuve de désorption comprend, comme moyen de chauffage, une entrée pour un gaz de désorption chaud qui, après échange de chaleur avec l'agent adsorbant, quitte la cuve de désorption par ladite sortie des composés organiques volatils désorbés, ledit gaz de désorption étant différent dudit milieu gazeux brut et en ce que la sortie d'agent adsorbant chargé de la cuve d'adsorption est reliée à l'entrée d'agent adsorbant chargé de la cuve de désorption par l'intermédiaire d'une première vanne rotative prévue pour permettre un transfert de l'agent adsorbant chargé de la cuve d'adsorption à la cuve de désorption d'une manière étanche au gaz.

Pour la mise en oeuvre du procédé, le dispositif comprend au moins une vanne rotative. Celle-ci peut être avantageusement du type de ce que l'on peut trouver dans les silos à grains dans le domaine de l'agriculture, qui permet le passage de matière solide particulaire tout en étant imperméable aux gaz. Une vanne rotative est une vanne de distribution, qui comprend une partie interne en rotation dans une partie externe. La partie interne comprend plusieurs compartiments et la partie externe comprend au moins deux ouvertures. Lorsque la partie interne est en rotation, un premier compartiment se trouve en face de l'ouverture de la partie externe qui donne sur l'alimentation à laquelle elle est reliée. Au fur et à mesure de la rotation, le premier compartiment avance et il est pratiquement fermé par la partie externe. Lorsque la rotation continue, c'est le deuxième compartiment qui arrive face à l'ouverture de la partie externe qui donne sur l'alimentation, et ainsi de suite. Lorsqu'un compartiment se trouve face à l'entrée de l'alimentation, il va se remplir en agent adsorbant à l'état solide. Le milieu gazeux brut à traiter va aussi remplir le compartiment, mais au fur et à mesure que le solide adsorbant s'accumule, il chasse le gaz. La vitesse de rotation de la vanne rotative est prévue pour que le premier compartiment soit complètement rempli d'agent adsorbant à l'état solide avant qu'il ne soit obturé par la paroi de la partie externe. Il faut à tout prix éviter la présence significative de gaz combustible ou de gaz présentant un risque d'explosion dans la cuve de désorption afin d'éviter l'explosion du dispositif.

Au fur et à mesure de la rotation de la partie interne de la vanne, le premier compartiment continue son avancée et se trouve petit à petit en face de l'autre ouverture de la partie externe qui donne sur la tubulure à laquelle la partie externe est reliée. L'agent adsorbant est alors libre de sortir du compartiment, et ceci en étant aidé autant par la rotation de la vanne que par l'arrivée de l'agent adsorbant contenu dans le deuxième compartiment qui arrive petit à petit également en face de l'ouverture au fur et à mesure de la rotation de la partie interne.

Dès lors, la cuve de désorption est isolée de la cuve contenant le biogaz et les risques d'explosion sont limités puisque les milieux gazeux dans la cuve d'adsorption et dans la cuve de désorption sont différents et leur mise en contact représente un risque d'explosion.

De plus, le gaz de désorption chaud fait office de gaz porteur et entraîne les composés organiques volatils en imposant un écoulement de gaz.

Avantageusement la cuve d'adsorption est à une première pression supérieure à la pression atmosphérique et la cuve de désorption est à une deuxième pression inférieure à la première et supérieure ou égale à la pression atmosphérique. Dès lors, la vanne rotative étant étanche aux gaz, les pressions de part et d'autre, c'est-à-dire celles régnant dans les deux cuves sont maintenues.

Avantageusement, l'entrée d'agent adsorbant de ladite cuve d'adsorption est reliée à la sortie d'agent adsorbant déchargé de la cuve de désorption au moyen d'une deuxième vanne rotative prévue pour permettre uniquement un passage de l'agent adsorbant déchargé dans la cuve d'adsorption d'une manière étanche au gaz.

Dans une forme de réalisation avantageuse, le dispositif selon l'invention comprend en outre un sécheur de milieu gazeux brut à traiter situé en amont de la cuve d'adsorption, la dite entrée de milieu gazeux brut à traiter de la cuve d'adsorption étant reliée au sécheur.

De préférence, la sortie des composés organiques volatils désorbés de la cuve de désorption est reliée à un moyen d'oxydation. Le moyen d'oxydation est par exemple une torchère, un brûleur, un ozoniseur et analogue.

Avantageusement, la cuve de désorption comprend comme moyen de chauffage une entrée pour un gaz de désorption chaud qui, après échange de chaleur avec l'agent adsorbant quitte la cuve de désorption par ladite sortie des composés organiques volatils désorbés. En outre, la sortie de gaz appauvri de la cuve d'adsorption est reliée à un filtre.

Dans une forme de réalisation particulièrement préférentielle, l'agent adsorbant est un mélange comprenant au moins du charbon actif et du graphite actif .

De préférence, le charbon actif sera sous la forme de perles de charbon actif (BAC beads activated carbon) qui présentent une dureté supérieure à des billes ou pellets de charbon actif conventionnelles et qui dès lors résistent mieux au passage dans la vanne rotative. Ces billes sont décrites par exemple dans les brevets US 5 676 738 et 5 904 750.

De manière particulièrement préférentielle, la sortie d'agent adsorbant, de la cuve d'adsorption, se situe dans la partie inférieure de ladite cuve d'adsorption et est reliée, par l'intermédiaire d'un premier dispositif d'ascension pneumatique à ladite entrée d'agent adsorbant de ladite cuve de désorption située dans la partie supérieure de la cuve de désorption.

Egalement, la sortie d'agent adsorbant déchargé de ladite cuve de désorption, située dans la partie inférieure de la cuve de désorption, est reliée par l'intermédiaire d'un deuxième dispositif d'ascension pneumatique, à ladite entrée d'agent adsorbant déchargé de la cuve d'adsorption située dans la partie supérieure de la cuve d'adsorption.

D'autres formes de réalisation du dispositif suivant l'invention sont indiquées dans les revendications annexées.

D'autres caractéristiques, détails et avantages de l'invention ressortiront de la description donnée ci-après, à titre non limitatif et en faisant référence au dessin unique annexé.

La figure unique est une vue schématique d'un dispositif de traitement de milieu gazeux brut contaminé selon l'invention.

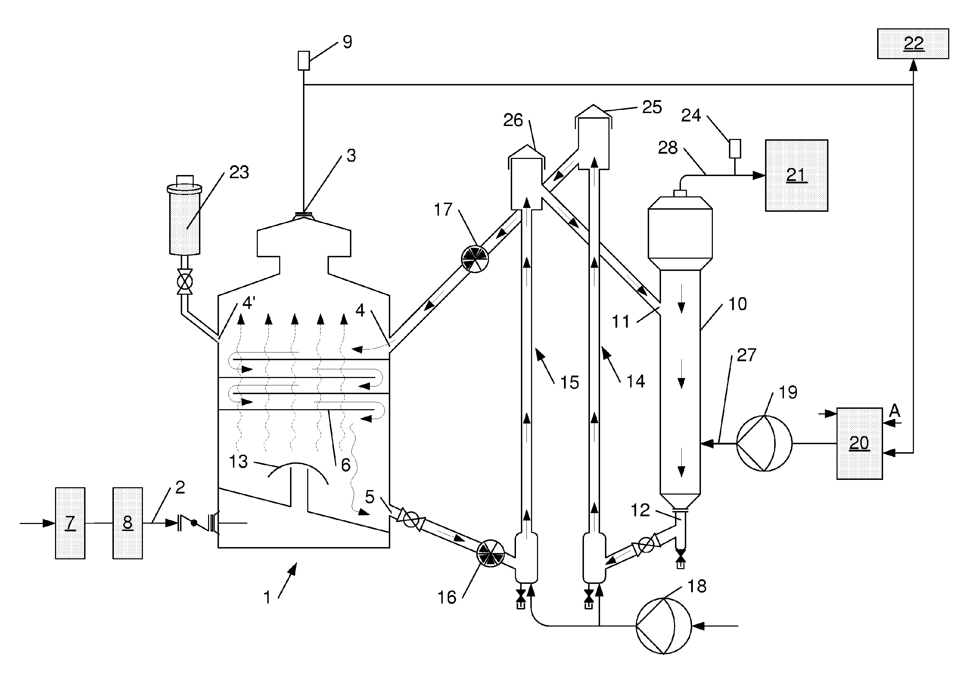

Comme on peut le voir à la figure 1, le dispositif selon l'invention comprend une cuve d'adsorption 1 qui comprend une entrée de milieu gazeux brut à traiter 2 contenant notamment des composés organiques volatils qui sera appelé à des fins de clarté ci-après le milieu gazeux brut. Il comprend en outre, une sortie de milieu gazeux traité 3 appauvri en composés volatils qui sera appelé ci-après le milieu gazeux appauvri, une entrée d'agent d'adsorbant 4 et une sortie d'agent adsorbant chargé 5. La cuve d'adsorption comprend également une série de plateaux 6.

Le milieu gazeux brut est par exemple du biogaz provenant d'une décharge et celui-ci contient du méthane. Avantageusement, avant de pénétrer dans la cuve d'adsorption 1, il sera préalablement séché dans un sécheur 7. Le sécheur 7 est de préférence un refroidisseur permettant de condenser et donc d'éliminer l'humidité contenue dans le gaz afin d'abaisser le point de rosée du milieu gazeux brut à traiter à 5°C à la pression atmosphérique. En outre, il est prévu de réchauffer le milieu gazeux brut à traiter avant qu'il entre dans la cuve d'adsorption 2 au moyen d'un réchauffeur 8 qui peut être tout type d'échangeur de chaleur. La température préférentielle régnant dans la cuve d'adsorption est de 20 à 25°C.

Si le milieu gazeux brut est un gaz contenant des particules, l'entrée 2 dans la cuve d'adsorption 1 pourra être précédée d'un filtre à particule.

Le milieu gazeux brut, dans l'exemple décrit ici est donc du biogaz qui est alimenté à une pression positive par rapport à la pression atmosphérique d'environ 50 mbar à 499 mbar, de préférence d'environ 200 à 300 mbar relatifs. La pression d'entrée est dictée par le fournisseur du milieu gazeux brut à traiter et est généralement comprise dans cette plage de 50 mbar à 499 mbar relatifs.

Dans la description ci-après les pressions seront toujours mentionnées en mbar relatifs, c'est-à-dire la différence de pression à ajouter à la valeur de la pression atmosphérique.

Le biogaz pénètre donc dans la cuve d'adsorption 1 de préférence par la partie inférieure de cette dernière au niveau de l'entrée 2 et il en ressort par la sortie 3 située dans la partie supérieure. La cuve d'adsorption comprend également avantageusement une soupape 9 calibrée à une valeur d'environ 500 mbar relatifs pour éviter toute surpression. Le milieu gazeux brut parcourt donc la cuve d'adsorption de bas en haut. La cuve d'adsorption 1 contient un agent adsorbant qui est alimenté par l'entrée 4 située de préférence dans une partie supérieure de la cuve d'adsorption et il ressort par la sortie d'agent adsorbant 5. L'agent adsorbant est choisi pour adsorber les contaminants du milieu gazeux brut. Lorsque le milieu gazeux brut entre en contact avec l'agent adsorbant, l'agent adsorbant fixe les composés organiques volatils et le milieu gazeux est appauvri en ces composés organiques volatils. L'agent adsorbant parcourt la cuve d'adsorption 1 de haut en bas alors que comme on l'a mentionné ci-avant, le milieu gazeux brut effectue le chemin inverse. L'avantage d'une telle alimentation à contre-courant est que les contacts entre l'agent adsorbant et le gaz sont améliorés.

En outre, les particules, alimentées dans la partie supérieure de la cuve d'adsorption 1 et en sortant par la partie inférieure, se déplacent sous l'effet de la gravité et le gaz circulant de bas en haut effectue un chemin normal pour un gaz. Dès lors, il met légèrement en suspension l'agent adsorbant pour éviter la sédimentation de celui-ci. Les plateaux 6 sont représentés ici de manière horizontale, mais il est clair que bien des variantes peuvent être utilisés comme par exemple des plateaux 6 légèrement inclinés de manière à favoriser le cheminement de l'agent adsorbant. Les particules se déplacent sur les plateaux 6 de gauche à droite et de droite à gauche qui comprennent des orifices alternés par étage permettant à l'agent adsorbant de descendre sur le plateau 6 inférieur. Ces plateaux 6 augmentent le chemin parcouru par l'agent adsorbant et le contact entre l'agent adsorbant et le milieu gazeux brut est amélioré. En outre, il est raisonnable de considérer que l'agent adsorbant est quasi à saturation de composés organiques volatils lorsqu'il arrive en bas de la cuve d'adsorption 1. Les plateaux 6 sont perméables au gaz qui monte et ne laissent passer l'agent adsorbant que par les orifices prévus à cet effet. De la même manière, l'entrée de milieu gazeux brut comprend une protection 13 permettant au milieu gazeux de pénétrer dans la cuve d'adsorption 1 sans que l'agent adsorbant ne puisse y entrer.

Afin d'améliorer le rendement du procédé selon l'invention, il a été prévu que l'agent adsorbant soit régénéré dans une cuve de désorption 10 et que l'on récupère les composés organiques volatils.

A cette fin, le dispositif comprend une cuve de désorption 10 qui comprend une entrée d'agent adsorbant chargé 11 et une sortie d'agent adsorbant déchargé 12. De préférence, l'entrée d'agent adsorbant chargé se fait par la partie supérieure de la cuve de désorption 10 et la sortie se fait par la partie inférieure. Dès lors, les particules sont soumises à la gravité lors de leur parcours dans la cuve de désorption 10.

Dans la forme de réalisation préférentielle illustrée, la désorption des composés organiques volatils de l'agent adsorbant est réalisée au moyen d'un échange de chaleur entre l'agent adsorbant et un gaz de désorption chaud qui est alimenté par une entrée 27 pour un gaz de désorption chaud située dans la partie inférieure.

Le gaz de désorption chaud traverse dès lors la cuve de désorption 10 de bas en haut, dans le sens inverse de l'agent adsorbant et ressort de celle-ci par une sortie 28. La sortie 28 est munie d'une soupape 24 calibrée de préférence à 200 mbar relatifs pour éviter toute surpression. Lorsque le gaz de désorption chaud sort de la cuve de désorption, il emporte les composés organiques volatils désorbés grâce à l'échange de chaleur.

Il ressort de ceci que l'agent adsorbant peut être n'importe quel type d'agent adsorbant, mais qu'il doit pouvoir adsorber les contaminants présents dans le milieu gazeux brut. Dans cette forme de réalisation, le milieu gazeux brut est du biogaz dont les principaux contaminants sont le limonène et l'α-pinène qui sont des hydrocarbures monoterpéniques. Ces composés sont éliminés par le charbon actif. Comme on l'a mentionné précédemment, les siloxanes contenus dans le biogaz brut à traiter posent également un problème, dès lors on utilise le graphite actif qui permet de les adsorber. L'agent adsorbant sera dès lors un mélange de ces deux agents adsorbants. Ces agents adsorbant peuvent être déchargés à une température comprise entre 170°C et 500 °C, de préférence entre 200°C et 400°C.

Comme on l'a mentionné également précédemment, il est préférable que l'agent adsorbant soit alimenté dans la cuve d'adsorption 1 et dans la cuve de désorption 10 dans une partie supérieure des cuves afin de les soumettre à la gravité lors de leur parcours dans ces cuves 1, 10 respectives.

Dès lors, le dispositif comprend également un premier dispositif d'ascension pneumatique 15 qui transporte l'agent adsorbant du bas de la cuve d'adsorption vers le haut de la cuve de désorption. Le dispositif d'ascension pneumatique 15 permet le transport de l'agent adsorbant recueilli au bas de la cuve d'adsorption 1 à l'entrée d'agent adsorbant 11 chargé situé dans la partie supérieure de la cuve de désorption 10. Le dispositif d'ascension pneumatique 15 permet donc l'ascension de l'agent adsorbant du bas vers le haut.

Le dispositif d'ascension pneumatique 15 est relié à un souffleur 18 alimenté en air A afin de recevoir le débit d'air nécessaire à l'ascension de l'agent adsorbant.

Comme on l'a mentionné précédemment, le biogaz circule dans la cuve d'adsorption. Le biogaz est un gaz à haute teneur en méthane qui, dès lors, s'il pénètre dans la cuve de désorption 10 présente un risque d'explosion d'une part lié à la présence d'air et d'autre part lié à la température élevée qui y règne. Dès lors, il serait très préjudiciable qu'un peu de méthane puisse s'introduire dans la cuve de désorption 10.

Le dispositif comprend dès lors, pour éviter la présence de méthane dans la cuve de désorption 10 une première vanne rotative 16 qui permet un transfert de l'agent adsorbant solide de la cuve d'adsorption 1 qui est étanche au gaz.

Bien évidemment, l'invention entend traiter tout type de gaz présentant le même risque, soit par une teneur en gaz combustible, soit par les caractéristiques propres du gaz en traitement. Par exemple, il peut être envisagé de traiter du butane, du propane contaminé ou encore tout autre type de gaz combustible.

La vanne rotative 16 est reliée d'un côté à la sortie d'agent adsorbant 5 de la cuve d'adsorption 1 et de l'autre côté au premier dispositif d'ascension pneumatique 15 afin d'empêcher la présence de méthane dans cette partie du dispositif. Le méthane reste confiné au niveau de la cuve d'adsorption 1 et dans la tubulure 5 aboutissant à la première vanne rotative 16.

Lorsque l'agent adsorbant est introduit dans la cuve de désorption 10, il est y déchargé de ces composés organiques volatils par l'échange de chaleur avec le gaz de désorption chaud susmentionné et il redescend au bas de cette dernière sous l'effet de la gravité.

Dès lors, en vue de sa réintroduction à l'état déchargé dans la cuve d'adsorption 1, la sortie d'agent adsorbant déchargé 12 située au bas de la cuve de désorption 10 est reliée à un deuxième dispositif d'ascension pneumatique 14 qui est à nouveau relié à une deuxième vanne rotative 17 afin d'empêcher la présence d'air provenant de la cuve de désorption 10 dans la cuve d'adsorption 1 qui aurait pour conséquence l'apparition d'un mélange explosif..

Dès lors, l'agent adsorbant quitte la cuve de désorption 10 au bas de cette dernière en 12, il arrive dans le dispositif d'ascension pneumatique 14 qui est relié également relié au souffleur d'air 18 qui produit un courant d'air ascendant. Dès lors, l'agent adsorbant est transporté grâce au courant d'air ascendant en haut du dispositif d'ascension pneumatique 14 pour être amené au niveau de la deuxième vanne rotative 17 et ensuite à la cuve d'adsorption 10, après passage étanche au gaz au travers de la vanne rotative 17.

Le parcours de l'agent d'adsorption est représenté par des flèches pleines et on considère que le taux de recirculation de l'agent adsorbant est de l'ordre de 30 à 90 minutes, de préférence environ 60 minutes. Le parcours du milieu gazeux brut à traiter est représenté par des flèches pointillées, comme on peut le voir également, le passage du gaz à contre courant permet de légèrement mettre en suspension l'agent adsorbant afin d'éviter sa sédimentation sur les plateaux 6 et de permettre un meilleur contact entre ces derniers.

Les composés organiques éliminés sont principalement les siloxanes, les silanols, les silanes, les composés halogénés, les mercaptans, les sulfures, les alcanes, les alcènes, les cycloaclanes, les aclools, les composés chlorés, les composés aromatiques, les hydrocarbures, les esters et analogues.

Dans la forme de réalisation préférentielle illustrée ici, le gaz appauvri est donc un gaz combustible propre qui pourra être utilisé ultérieurement comme combustible, par exemple pour une production d'électricité "verte". L'électricité verte pourra avantageusement être produite par une centrale électrique thermique classique représentée schématiquement en 22. En outre, une partie du méthane produit est utilisé pour le chauffage du gaz qui servira à désorber les composés organiques volatils et qui est alimenté dans la cuve de désorption par l'entrée 27. Dès lors, le méthane produit sera brûlé en présence d'air A par le brûleur 20. Le gaz ainsi chauffé est introduit dans le souffleur 19 et est alimenté dans la cuve de désorption 10.

Ce gaz de désorption chaud, comme on l'a mentionné précédemment emporte les composés organiques volatils qui seront évacués par la sortie 28 de la cuve de désorption 10 pour qu'ils subissent une étape ultérieure. Cette étape ultérieure peut être une condensation des composés organiques volatils dans un condenseur 21, un brûlage de ces derniers en vue de leur élimination dans un dispositif d'oxydation 21 tel une torchère, un brûleur ou encore un ozoniseur.

Dans la forme de réalisation préférentielle, la cuve d'adsorption comprend en outre un réservoir 23 muni d'une vanne qui contient une réserve d'agent adsorbant. Egalement les deux dispositifs d'ascension pneumatiques 14 et 15 sont chacune respectivement munie d'un système de protection 25 et 26 permettant que l'air soufflé s'échappe dans l'atmosphère sans l'entrée de contaminants supplémentaires.

Il est bien entendu que la présente invention n'est en aucune façon limitée aux formes de réalisations décrites ci-dessus et que bien des modifications peuvent y être apportées sans sortir du cadre des revendications annexées.

Par exemple, il est également prévu d'utiliser un système de vanne de pontage sur le biogaz après la cuve d'adsorption. Cette vanne permettrait, en cas de besoin, d'augmenter le débit dans la cuve d'adsorption pour assurer un fonctionnement optimal avec un débit optimal de biogaz dans la cuve d'adsorption.

En outre, un système à trois vannes permet de by-passer la cuve d'adsorption en cas de nécessité.

Il est également prévu de munir chacune des vannes rotatives d'un moteur anti-déflagration muni d'un variateur de vitesse.

En outre, une filtration du biogaz appauvri contenant du média SAG peut être prévue. Cette dernière permettrait d'éliminer d'éventuels reste de composés à base de silice. En effet, ces derniers présentent un réel problème de vitrification s'ils restent dans le gaz combustible lorsque celui-ci est utilisé, même pour des quantités faibles de quelques mg/m³ de gaz.

Il est également prévu que le brûleur 20 soit alimenté en gaz de ville, en gaz propre, produit par le procédé selon l'invention, mais également par du biogaz non traité.

## Revendications

1. Procédé de traitement de milieu gazeux brut contenant des composés organiques volatils comprenant:
- une amenée dudit milieu gazeux brut au travers d'un agent adsorbant à l'état solide contenu dans une zone d'adsorption, ledit milieu gazeux contenant au moins partiellement un gaz combustible ou un gaz présentant un risque d'explosion
- une adsorption des composés organiques volatils sur ledit agent adsorbant,
- une sortie d'un milieu gazeux appauvri en composés organiques volatils hors de ladite zone d'adsorption,
- un transfert dudit agent adsorbant chargé en composés organiques volatils vers une zone de désorption,
- une désorption des composés organiques volatils de façon à obtenir un agent adsorbant déchargé, et
- une récolte des composés organiques volatils désorbés,
**caractérisé en ce que** ladite désorption est réalisée en présence d'un gaz de désorption chaud qui est différent dudit milieu gazeux exposé à l'adsorption et **en ce que** ledit transfert de l'agent adsorbant chargé à l'état solide est effectué d'une manière étanche aux gaz.

2. Procédé selon la revendication 1, dans lequel ledit milieu gazeux brut est du biogaz.

3. Procédé selon la revendication 1 ou 2, dans lequel la zone d'adsorption est à une première pression, supérieure à la pression atmosphérique et la zone de désorption est à une deuxième pression, inférieure à la première et supérieure ou égale à la pression atmosphérique.

4. Procédé selon l'une quelconque des revendications précédentes, comprenant en outre un retour de l'agent adsorbant déchargé de ladite zone de désorption vers ladite zone d'adsorption qui est effectué d'une manière étanche aux gaz.

5. Procédé selon l'une quelconque des revendications précédentes, dans lequel ladite amenée du milieu gazeux brut à traiter est précédée d'un séchage du milieu gazeux brut à traiter.

6. Procédé selon l'une quelconque des revendications précédentes, dans lequel la désorption comprend un chauffage de l'agent adsorbant chargé par ledit gaz de désorption chaud à une température comprise entre 170°C et 500°C.

7. Procédé selon l'une quelconque des revendications précédentes, dans lequel la récolte des composés organiques volatils est suivie d'une oxydation de ceux-ci.

8. Procédé selon l'une quelconque des revendications précédentes, comprenant en outre une filtration du milieu gazeux appauvri.

9. Procédé selon l'une quelconque des revendications 1 à 8, dans lequel l'agent adsorbant est un mélange comprenant au moins du charbon actif et/ou du graphite actif.

10. Procédé selon l'une quelconque des revendications 2 à 9, comprenant en outre une utilisation du biogaz appauvri pour la production d'électricité verte.

11. Procédé selon l'une quelconques des revendications 1 à 10, dans lequel ledit gaz de désorption chaud est obtenu par un brûlage en présence d'air d'une partie du milieu gazeux appauvri obtenu.

12. Dispositif de traitement de gaz pour la mise en oeuvre du procédé selon l'une des revendications 1 à 11, comprenant:
- une cuve d'adsorption (1) de composés organiques volatils d'un milieu gazeux brut à traiter comprenant une entrée (2) de milieu gazeux brut à traiter, une sortie (3) de milieu gazeux appauvri en composés organiques volatils, une entrée (4) d'agent adsorbant à l'état solide et une sortie (5) d'agent adsorbant chargé de composés organiques volatils, et
- une cuve de désorption (10) des composés organiques volatils adsorbés sur l'agent adsorbant comprenant une entrée (11) d'agent adsorbant chargé, une sortie (12) d'agent adsorbant déchargé et une sortie (28) des composés organiques volatils désorbés,
**caractérisé en ce que** ladite cuve de désorption (10) comprend, comme moyen de chauffage, une entrée (27) pour un gaz de désorption chaud qui, après échange de chaleur avec l'agent adsorbant, quitte la cuve de désorption (10) par ladite sortie (28) des composés organiques volatils désorbés, ledit gaz de désorption étant différent dudit milieu gazeux brut et **en ce que** la sortie d'agent adsorbant chargé (5) de la cuve d'adsorption (1) est reliée à l'entrée (11) d'agent adsorbant chargé de la cuve de désorption (10) par l'intermédiaire d'une première vanne rotative (16) prévue pour permettre un transfert de l'agent adsorbant chargé de la cuve d'adsorption (1) à la cuve de désorption (10) d'une manière étanche au gaz.

13. Dispositif selon la revendication 12, dans lequel ladite entrée (4) d'agent adsorbant de ladite cuve d'adsorption (1) est reliée à ladite sortie (12) d'agent adsorbant déchargé de la cuve de désorption (10) au moyen d'au moins une deuxième vanne rotative (17) prévue pour permettre un passage de l'agent adsorbant déchargé de la cuve de désorption (10) à la cuve d'adsorption (1) d'une manière étanche au gaz.

14. Dispositif selon la revendication 12 ou la revendication 13, comprenant en outre un sécheur (7) de milieu gazeux brut à traiter situé en amont de l'entrée (2) de milieu gazeux brut à traiter de la cuve d'adsorption (1).

15. Dispositif selon l'une quelconque des revendications 12 à 14, dans lequel la sortie (28) des composés organiques volatils désorbés de la cuve de désorption (10) est reliée à un moyen d'oxydation (21).

16. Dispositif selon l'une quelconque des revendications 12 à 15, dans lequel la sortie (3) de milieu gazeux appauvri de la cuve d'adsorption (1) est reliée à un filtre.

17. Dispositif selon l'une quelconque des revendications 12 à 16, dans lequel l'agent adsorbant est un mélange comprenant au moins du charbon actif et/ou du graphite actif.

18. Dispositif selon l'une quelconque des revendications 12 à 17, dans lequel ladite sortie (5) d'agent adsorbant de la cuve d'adsorption (1), se situe dans la partie inférieure de ladite cuve d'adsorption (1) et est reliée, par l'intermédiaire d'un premier dispositif d'ascension pneumatique (15) à ladite entrée (11) d'agent adsorbant de ladite cuve de désorption (10) située dans la partie supérieure de la cuve de désorption (10).

19. Dispositif selon l'une quelconque des revendications 12 à 18, dans lequel ladite sortie (12) d'agent adsorbant déchargé de ladite cuve de désorption (10), située dans la partie inférieure de la cuve de désorption (10), est reliée par l'intermédiaire d'un deuxième dispositif d'ascension pneumatique (14), à ladite entrée (4) d'agent adsorbant déchargé de la cuve d'adsorption (1) située dans la partie supérieure de la cuve d'adsorption (1).
